# EUROPEAN PATENT SPECIFICATION

(11) **EP 2 096 856 B1**
(45) Date of publication and mention of the grant of the patent: **12.11.2014**
(21) Application number: 09250512.2
(22) Date of filing: 26.02.2009
(51) Int. Cl.: H04N 1/10, H04N 1/00

(54) **Image reading device, apparatus, and method**
Bildlesevorrichtung und -verfahren
Dispositif de lecture d'images, appareil et procédé

(30) Priority: 29.02.2008 JP 2008050328
(43) Date of publication of application: 02.09.2009
(73) Proprietor: Ricoh Company, Ltd., Tokyo 143-8555 (JP)
(72) Inventor: Baba, Hiroyuki, Tokyo 143-8555 (JP)
(74) Representative: Leeming, John Gerard

(56) References cited:
- EP-A1- 1 361 744
- EP-A1- 1 404 104
- US-A- 6 032 864
- US-A1- 2004 084 529
- US-B1- 6 330 083
- US-B1- 6 404 514

## Description

Example embodiments of the present invention relate to an image reading device, an image forming apparatus including the image reading device, and an image reading method.

In reading an image from a document, some conventional image reading devices allow a user to vary and select a desired level of productivity (number of document sheets read per unit time) and image quality.

For example, one conventional image reading device allows a user to select either an automatic reverse document feed (ARDF) reading mode or a sheet-through document feed (DF) reading mode. In the ARDF mode, a document feeder automatically feeds a document from a document tray to a document reading table and a carriage reads an image from the document on the document reading table while moving. In the sheet-through DF reading mode, the carriage remains stationary and reads an image from a document while the document is being fed. The ARDF reading mode and the sheet-through DF reading mode are also associated with reading resolutions of 1200 dpi (dot per inch) and 600 dpi, respectively, so that a user can select either an image-quality priority mode or a productivity priority mode.

Another similar conventional approach relates to an image reading system in which an image reading device is connected to an output device via a network. The image reading system automatically optimizes various control operations in accordance with an image reading speed of the image reading device, an image output speed of the output device, and an effective speed of the network.

However, the above-described conventional image reading device needs two reading units corresponding to the two reading modes, i.e., the sheet-through DF reading mode and the ARDF reading mode, resulting in an increased manufacturing cost. Further, a user cannot specify a particular reading mode (e.g., the sheet-through DF reading mode capable of providing high-speed reading) to increase the productivity of the reading mode. Since a user cannot also select either an image-quality priority mode or a productivity priority mode and the resolution differs between the image-quality priority mode and the productivity priority mode, the conventional image reading device may not provide an image having a resolution requested from a user.

At least in the sheet-through DF reading mode, in order to read a document at a high resolution, the document must be transported at a relatively low speed compared to when the document is read at a standard resolution. By contrast, when a document is read at a low resolution, the document can be transported at a relatively high speed compared to when the document is read at a standard resolution.

In other words, the lower the resolution, the higher the document transport speed and the higher the reading productivity. Conversely, the higher the resolution, the lower the reading productivity. It is to be noted that the resolution here is that of a document image in the sub-scanning direction, that is, a direction in which the document is transported. On the other hand, the resolution of a document image in the main-scanning direction depends on a CCD (charge-coupled device) and is thus assumed to be constant.

In terms of image quality, an image read at a high resolution (low speed) can more finely reproduce the original document than an image read at a low resolution (high speed) and interpolated by digital image processing. Accordingly, low-speed reading can increase the resolution of a document image, resulting in an excellent image quality.

However, in order to increase the reading productivity without reducing the reading resolution, the conventional image reading device needs a mechanism for feeding a document at a high speed and additional circuitry and components for increasing the light intensity of a light source to read a document.

Alternatively, the above-described conventional image reading system also has disadvantages in that a user cannot select a desired level of productivity/image quality because the productivity of the image reading system as a whole is determined by capabilities of the output device.

US 6,330,083 B1 discloses an image reading device capable of executing a light quantity correcting operation corresponding to a set mode.

### SUMMARY OF THE INVENTION

The present disclosure provides an image reading device, an image reading method, and an image forming apparatus as defined by the appended claims, allowing a user to adjust the balance between productivity and image quality.

A more complete appreciation of the disclosure and many of the attendant advantages thereof will be readily acquired as the same becomes better understood by reference to the following detailed description when considered in connection with the accompanying drawings, wherein:
FIG. 1 is a sectional view illustrating a structure of an image reading device according to an illustrative embodiment of the present disclosure;
FIG. 2 is a block diagram illustrating a schematic configuration of an image forming apparatus including an image reading device according to an illustrative embodiment;
FIG. 3 is a schematic view illustrating a structure of a document reading section in a platen reading mode;
FIG. 4 is a schematic view illustrating a structure of the document reading section in a document-feed reading mode;
FIG. 5 is a block diagram illustrating a basic configuration of a read-signal processing unit illustrated in FIG. 2;
FIG. 6 is a block diagram illustrating a detailed configuration of the read-signal processing unit illustrated in FIG. 2;
FIG. 7A is a block diagram illustrating a configuration of an image processing unit illustrated in FIGS. 1 and 5;
FIG. 7B is an illustration for explaining processing performed in a first image processing section of the image processing unit;
FIG. 7C is an illustration for explaining processing performed in a second image processing section of the image processing unit;
FIG. 8 is a diagram illustrating density adjustment performed in a.gamma conversion unit of the first image processing section;
FIG. 9 is a diagram illustrating an example of a look-up table used for density adjustment; and
FIG. 10 is a block diagram illustrating a functional configuration of an image reding device according to an illustrative embodiment.

The accompanying drawings are intended to depict illustrative embodiments of the present disclosure and should not be interpreted to limit the scope thereof. The accompanying drawings are not to be considered as drawn to scale unless explicitly noted.

In describing embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner and achieve similar results.

Although the illustrative embodiments are described with technical limitations with reference to the attached drawings, such description is not intended to limit the scope of the present invention and all of the components or elements described in the illustrative embodiments of this disclosure are not necessarily indispensable to the present invention.

Below, an image reading device 100 and an image forming apparatus 200 including the image reading device 100 according to an illustrative embodiment of the present disclosure are described with reference to the drawings. In the following description, for example, a sheet-through DF (document feed) reading mode represents a mode in which a carriage remains stationary and reads an image from a document while the document is being fed. A platen reading mode represents a mode in which a document is placed on a document reading table and a carriage reads an image from the document while moving. An automatic reverse document feed (ARDF) reading mode represents a mode in which a document feeder automatically feeds a document from a document tray to a document reading table and a carriage reads an image from the document on the document reading table while moving.

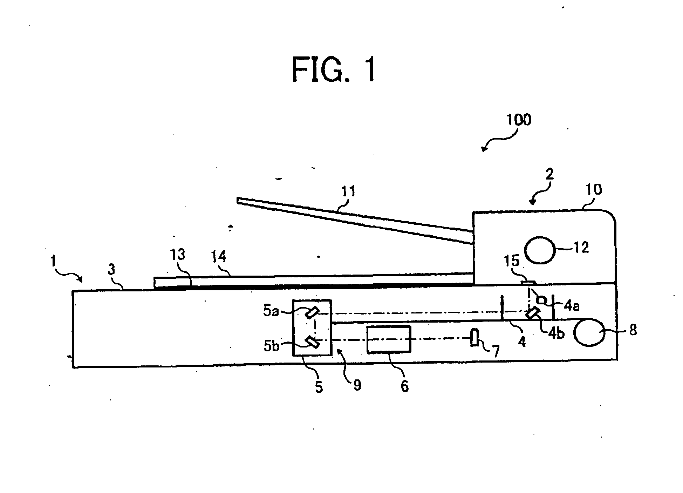

FIG. 1 is a sectional view illustrating a structure of the image reading device 100 according to the present illustrative embodiment.

In FIG. 1, the image reading device 100 according to the present illustrative embodiment includes a device body 1, a document feeder 2, and a document reading table 3.

The device body 1 includes a scanning optical unit 9. The scanning optical unit 9 further includes a first carriage 4, a second carriage 5, a lens 6, a photoelectric transducer 7, and a carriage stepping motor 8. The first carriage 4 includes a light source 4a and a mirror 4b. The light source 4a may be, for example, a xenon lamp or fluorescent light. The second carriage 5 includes a first mirror 5a and a second mirror 5b. The photoelectric transducer 7 is, for example, a one-dimensional COD (charge-coupled device) and, in the following description, is assumed to be a three-line CCD (hereinafter "CCD 7") for reading a color image. The carriage stepping motor 8 drives the first carriage 4 and the second carriage 5.

The document feeder 2 is provided with an SDF (sheet document feeder) unit 10 and a document tray 11. The SDF unit 10 includes a document-feed stepping motor 12 for feeding a document. On an upper portion of the document reading table 3 is pivotally mounted a document cover plate 14, under which a document. 13 is set. At an end portion of the document reading table 3 is disposed a reference white board 15 for shading correction.

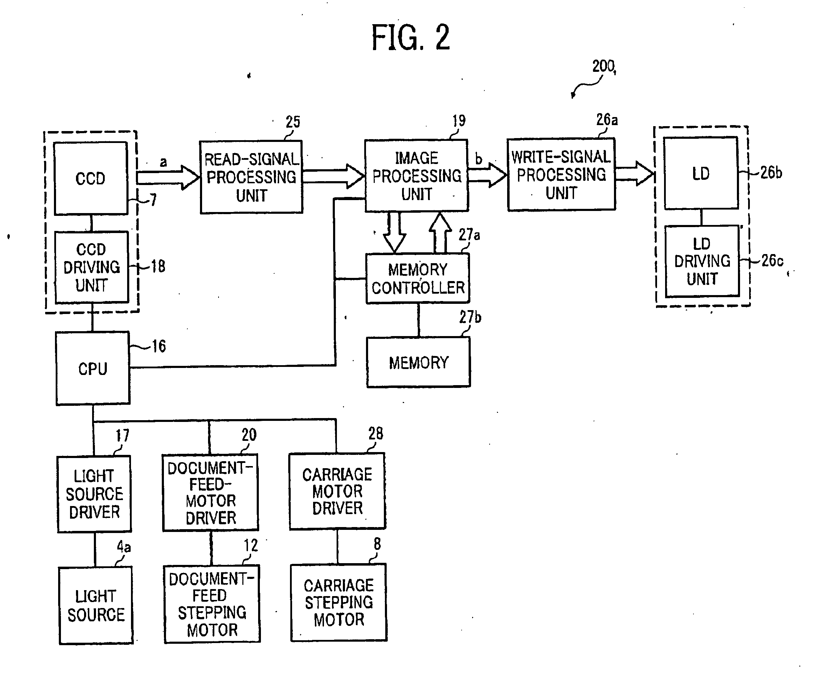

FIG. 2 is a block diagram illustrating a schematic configuration of the image forming apparatus 200 including the image reading device 100 according to the present illustrative embodiment. Although the image forming apparatus 200 is illustrated as a color MFP (multi functional peripheral) in FIG. 2, the image forming apparatus according to the present invention is not limited to the color MFP illustrated in FIG. 2 but may be any other suitable type of image forming apparatus.

In FIG. 2, the image forming apparatus 200 includes the light source 4a, the CCD 7, the document-feed stepping motor 12, a document-feed motor driver 20, the.carriage stepping motor 8, a carriage-motor driver 28, a control CPU (central processing unit) 16, a light-source driver 17, a CCD driver 18, a read-signal processing unit 25, an image processing unit 19, a memory 27b, a memory controller 27a, a write-signal processing unit 26a, an LD (laser diode) 26b, and an LD driving unit 26c.

### [Configuration of document reading section]

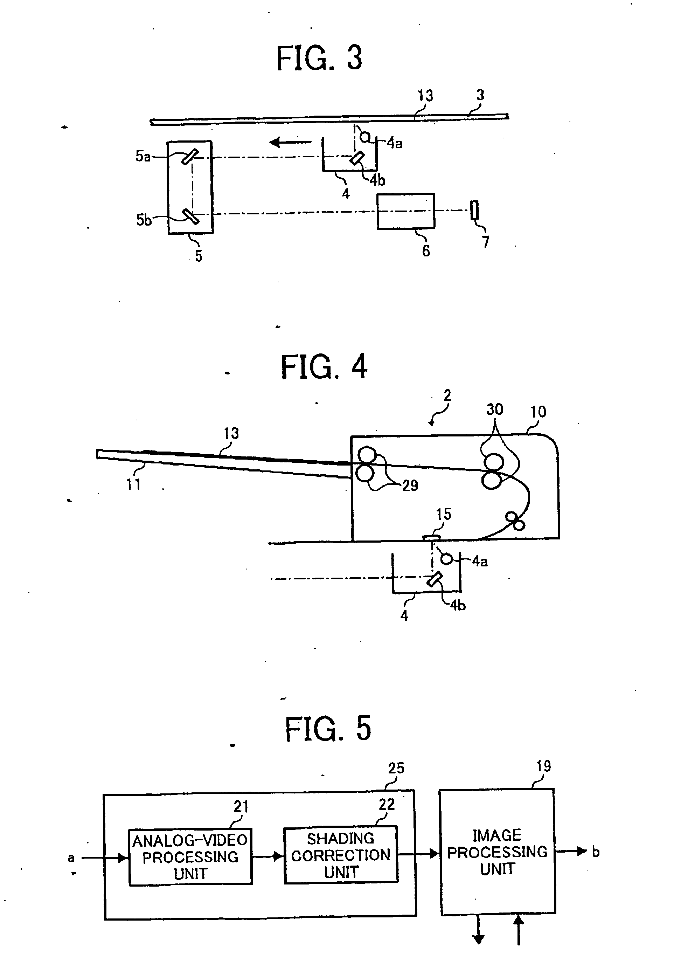

FIG. 3 is a schematic view illustrating a structure of a document reading section in the platen reading mode. FIG. 4 is a schematic view illustrating a structure of the document reading section in the sheet-through DF reading mode.

The document reading modes according to the present illustrative embodiment include, for example, the platen reading mode, in which image data is read from a document placed on the document reading table 3 as illustrated in FIG. 3, and the sheet-through DF reading mode, in which image data is read from a document at a fixed reading position while the document is being fed using the document feeder 2. A description is given below of examples of operations in the platen reading mode and the sheet-through DF reading mode.

### [Operation in the platen reading mode]

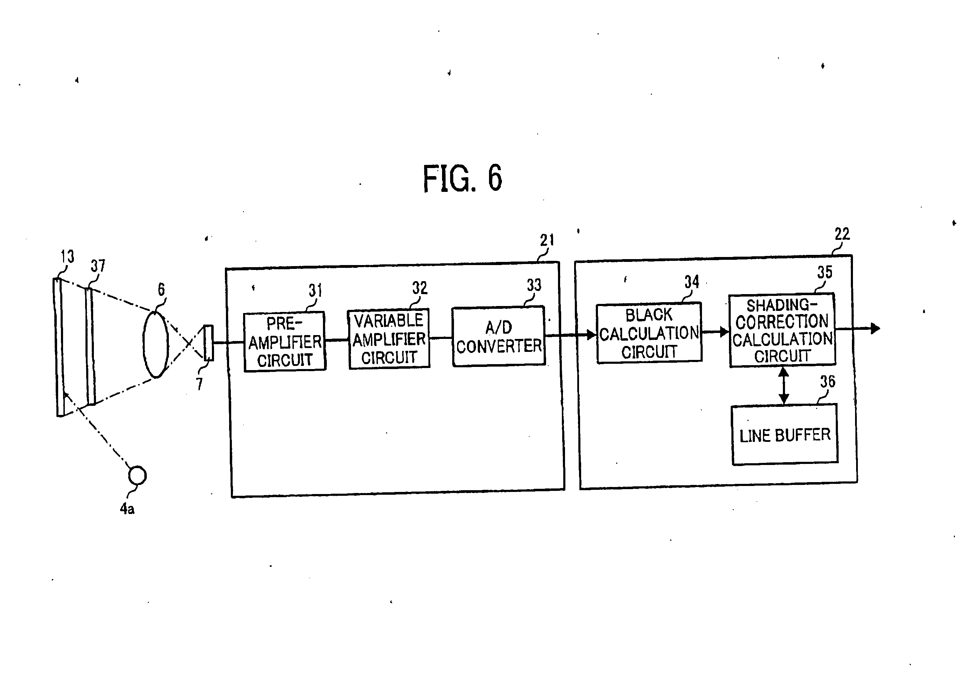

As illustrated in FIG. 3, in the platen reading mode, the document 13 is set on the document reading table 3, which is disposed below the document cover plate 14. The control CPU 16 activates the light-source driver 17 to turn the light source 4a on. The CCD 7 driven with the CCD driver 18 scans the reference white board 15 to read light signals, and an A/D (analog-digital) converter of the image processing unit 19 converts the read signals to digital data. The read-signal processing unit 25 retains the digital data as white reference data on a RAM (random access memory), such as a line buffer 36 illustrated in FIG. 6, provided in the image processing unit 19 for shading correction.

The control CPU 16 controls the carriage-motor driver (driving unit) 28 to activate the carriage stepping motor 8, so that the first carriage 4 travels toward the document 13. When the first carriage 4 scans the surface of the document 13, the CCD 7 performs photoelectric conversion on image data of the document 13.

### [Operation in sheet-through DF reading mode]

Unlike the above-described platen reading mode in which a carriage scans a document placed on the table, for the document-feed reading (so-called sheet-through) mode, the first carriage 4 stopping at a certain position scans a document fed with the document feeder 2.

As illustrated in FIG. 4, in the sheet-through DF reading mode, the control CPU 16 controls the first carriage 4 to scan the reference white board 15 at a constant speed and stop at a sheet-through document reading position. The control CPU 16 controls the document-feed motor driver 20 to drive the document-feed stepping motor 12 for feeding the document.

The document 13 set on the document tray 11 is fed to a predetermined reading position of the first carriage 4 using separation rollers 29 and conveyance rollers 30. At this time, while the document 13 is being fed at a constant speed, the CCD 7 photoelectrically converts image data of the document 13 with the first carriage 4 stopping at the sheet-through document reading position.

### [Read-signal processing unit]

FIG. 5 is a block diagram illustrating a basic configuration of the read-signal processing unit 25 illustrated in FIG. 2. FIG. 6 is a block diagram illustrating a more detailed configuration of the read-signal processing unit 25.

The read-signal processing unit 25 illustrated in FIG. 5 includes an analog-video processing unit 21 and a shading-correction processing unit 22, and processes an input analog-vide signal "a" to generate digitally-converted data and transmits the digitally-converted data to the image processing unit 19.

After the analog-video processing unit 21 performs digital conversion on the analog-video signal "a" having been photoelectrically converted through the CCD 7, the digitally-converted data is corrected using the shading-correction processing unit 22 for the document reading section and transmitted to the image processing unit 19 for various types of image processing.

The analog-video processing unit 21 illustrated in FIG. 5 includes, for example, preamplifier circuit 31, a variable amplifier circuit 32, and an A/D (analog-to-digital) converter 33 illustrated in FIG. 6. The shading-correction processing unit 22 includes a black calculation circuit 34, a shading-correction calculation circuit 35, and the line buffer 36. The line buffer 36 is a memory to retain the above-described white-reference data used as reference data of the shading correction.

As illustrated in FIG. 6, light emitted from the light source 4a is reflected by the document 13 placed on the document reading table 3, passes through a shading adjustment plate 37, is condensed through the lens 6 and focused on the CCD 7. The shading adjustment plate 37 adjusts the amount of the reflected light so as to reduce a difference between a middle portion and end portions of the CCD 7. If the difference in the amount of reflected light is too large, only a calculation result including large distortion might be obtained in the shading-correction processing unit 22. Hence, according to the present illustrative embodiment, such a difference in the amount of reflected light is reduced before shading-correction calculations are performed. Incidentally, in FIG. 6, a mirror for turning the reflected light back is omitted for simplicity.

### [Image processing unit]

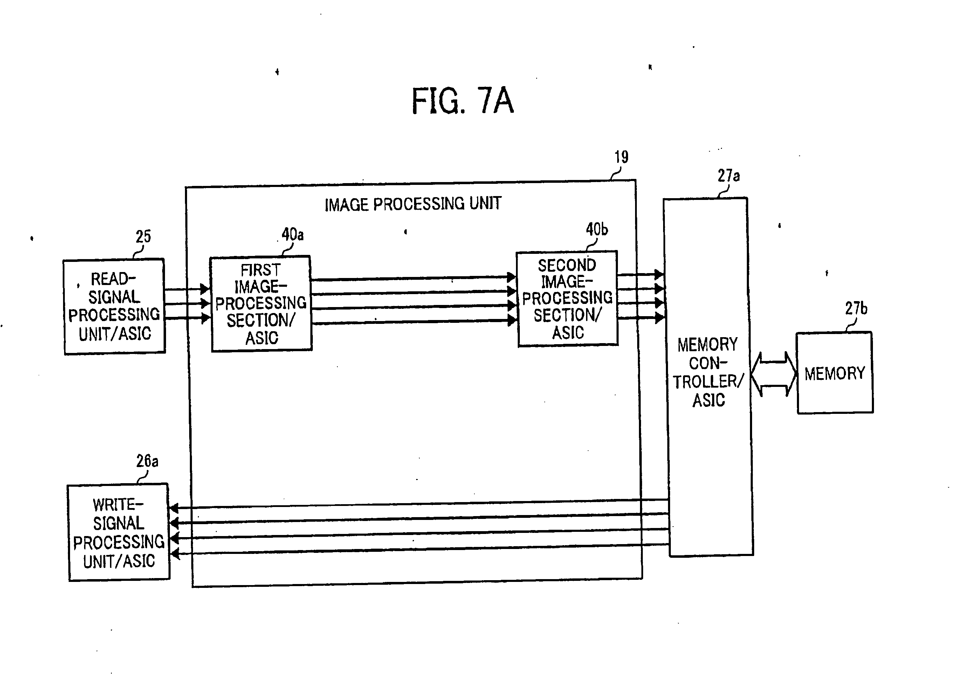

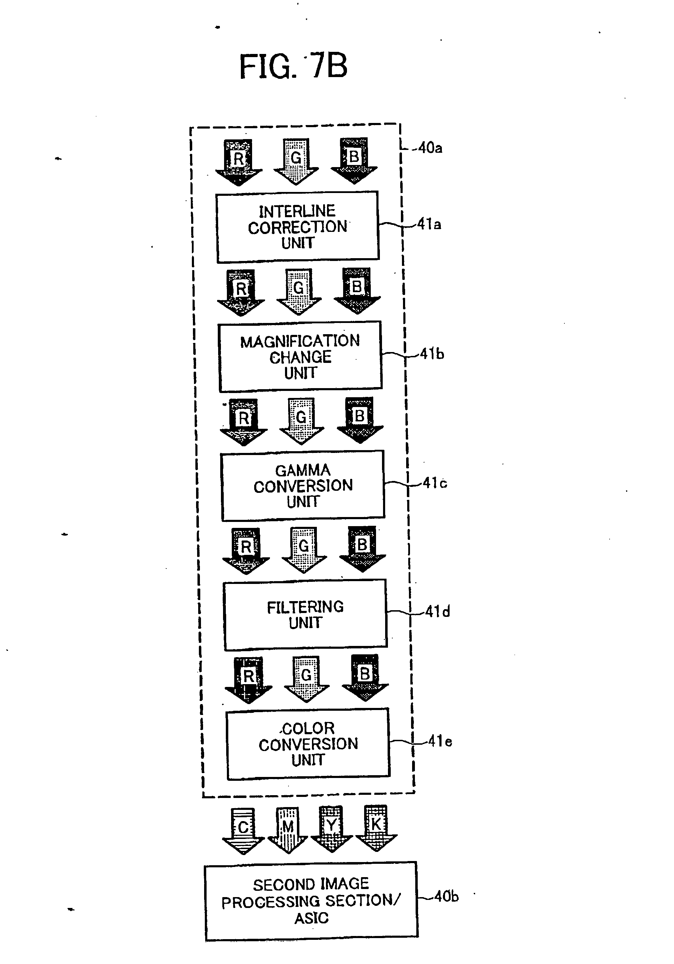

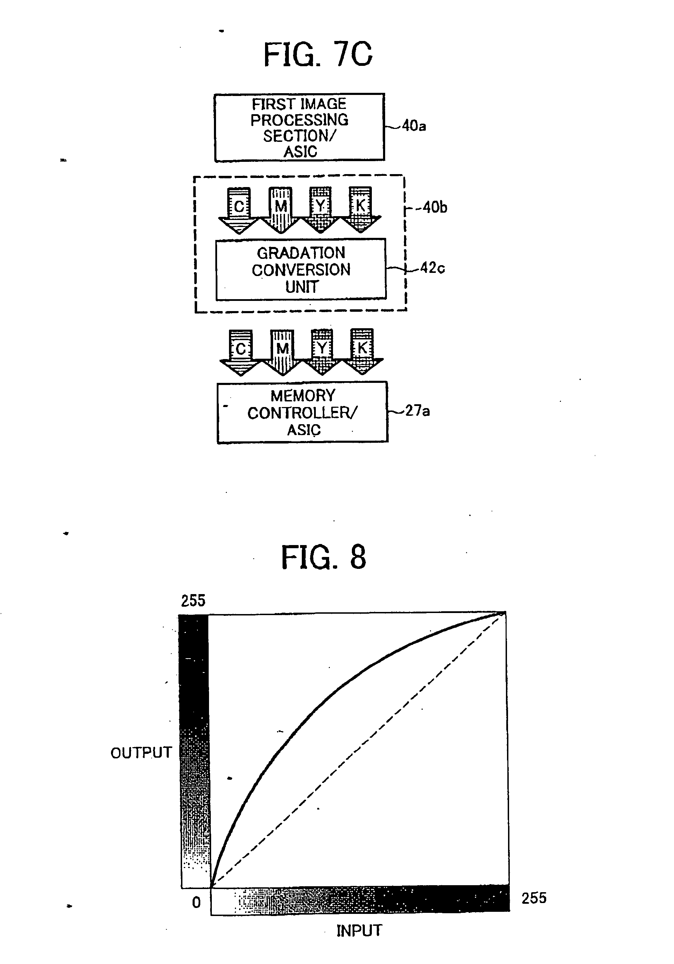

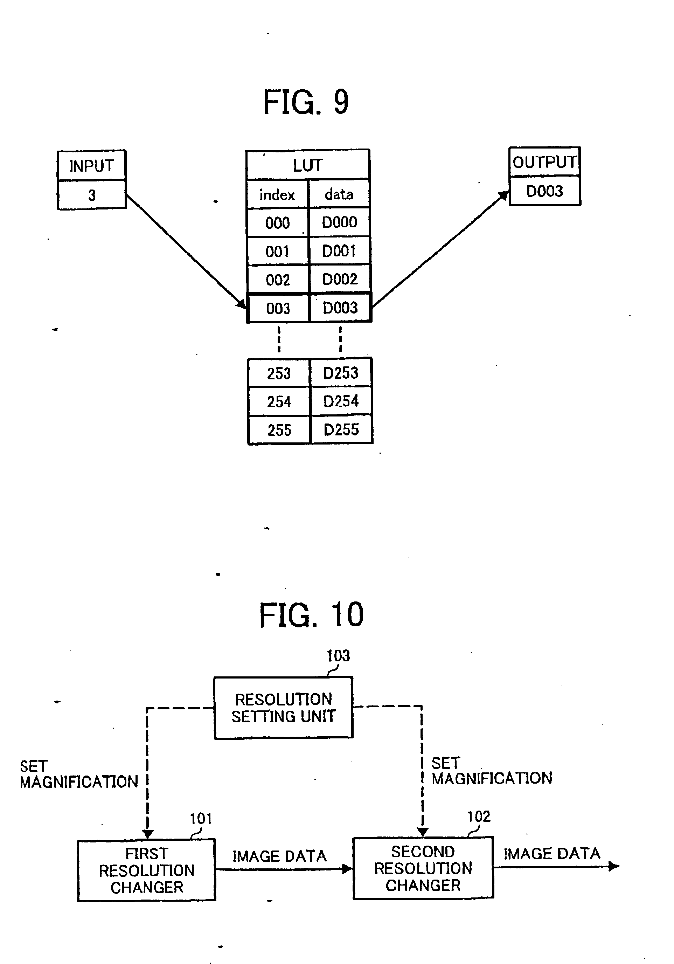

FIG. 7A is a block diagram illustrating a configuration of the image processing unit 19 illustrated in FIGS. 1 and 5. FIG. 7B is an illustration for explaining a process executed in a first image processing section 40a of the image processing unit 19. FIG. 7C is an illustration for explaining a process executed in a second image processing section 40b of the image processing unit 19. FIG. 8 is an illustration for explaining density adjustment performed in a gamma conversion unit 41c of the first image.processing section 40a. FIG. 9 is an illustration of an example of a look-up table used for the density adjustment.

As illustrated in FIG. 7A, the image processing unit 19 includes the first image processing section 40a and the second image processing section 40b, each of which is implemented by an ASIC (application-specific integrated circuit).

### [First image processing section]

As illustrated in FIG. 7B, the first image processing section 40a serving as first image processing means performs interline correction, magnification change (resolution change), gamma conversion, filtering, and color conversion on image data from the read-signal processing unit in an interline-correction unit 41a, a magnification change unit 41b, a gamma conversion unit 41c, a filtering unit 41d, and a color conversion unit 41e, respectively.

The interline correction unit 41a corrects a line deviation between red (R), green (G), and blue (B), which is caused by a difference in mount positions between RGB in the CCD 7. For example, when a blue (B) line is used as a reference line, the interline correction unit 41a corrects the amount of line deviation between RGB. The magnification change unit 41b converts the resolution of image data read from the document 13 to a desired resolution. The gamma conversion unit 41 mainly performs conversion processing on density adjustment, and, for example, as illustrated in FIG. 8, outputs image data input with a given density as image data with a desired different density.

As illustrated in FIG. 9, such density adjustment may be performed using a look-up table containing information on a plurality of pairs of input and output densities. The filtering unit 41d performs filtering calculations for MTF (modulation transfer function) correction, sharpening, and smoothing. The color conversion unit 41e converts the RGB color space to a color space of an output device, for example, CMYK (cyan, magenta, yellow, black) color space. For a color image, the above-described processing of the first image processing section 40a is performed on each of the RGB components. By contrast, for a monochrome image, the above-described processing may be performed on only one component using, for example, a path to G data of the RGB.

### [Second image processing section (in the case in which a fixed threshold is binarized in gradation conversion)]

As illustrated in FIG: 7C, the second image processing section 40b serving as second image processing means performs gradation conversion in a gradation conversion unit 42c. When the gradation conversion unit 42c of the second image processing section 40b performs gradation conversion on image data before storing the image data on, for example, the memory 27b or any other suitable storage, the number of gradations may be set relatively small to reduce the amount of stored data. The following example assumes that binary gradation conversion is selected, and more specifically, the gradation conversion is performed by binarizing a fixed threshold when a write unit is capable of outputting up to one bit, that is, two gradations.

When a binary image is requested, the gradation conversion unit 42c of the second image processing section 40b illustrated in FIG. 7C converts each of CMYK images of eight bits, i.e., 256 gradations to binary image data of two gradations, and transmits the binary image data as image data "b" to the memory controller (ASIC) 27a serving as memory control means.

Here, an example of processing on such a fixed threshold is described below.

For example, when the threshold is 128, the second image processing section 40b binarizes the pixel data of an input image in the following manner.

When 0≤pixel data<128 is true, the second image processing section 40b outputs 0; and
when 128≤pixel data≤255 is true, the second image processing section 40b outputs 1.

### [Second image processing section (in the case in which a fixed threshold is quaternized in gradation conversion)]

Next, a description is given of gradation conversion performed by quaternizing a fixed threshold when the write unit can output up to two bits, i.e., four gradations.

When a quaternary image is requested, the gradation conversion unit 42c of the second image processing section 40b illustrated in FIG. 7C converts each of CMYK images of eight bits, i.e., 256 gradations to quaternary image data of four gradations, and outputs the quaternary image data as image data "b" to the memory controller (AISC) 27a.

For processing on such a fixed, quaternary threshold, for example, the second image processing section 40b quaternizes the pixel data of an input image in the following manner.

When 0≤pixel data<64 is true, the second image processing section 40b outputs 0;
when 64≤pixel data<128 is true, the second image' processing section 40b outputs 1;
when 128≤pixel data<192 is true, the second image processing'section 40b outputs 2; and
when 192≤pixel data≤255 is true, the second image processing section 40b outputs 3.

Thus, the second image processing section 40b quaternizes the input image.

### [Image-data storage]

In the above-described examples of gradation conversion, the gradation conversion unit 42c converts CMYK image data into one-bit or two-bit image data. Such converted image data is temporarily stored on the memory 21b via the memory controller 27a.

FIG. 10 is a block diagram illustrating a functional configuration of an image reading device according to an illustrative embodiment of the present disclosure.

As illustrated in FIG. 10, the image reading device according to the present illustrative embodiment includes, for example, a first resolution changer 101, a second resolution changer 102, and a resolution setting unit 103. The first resolution changer 101 serving as first resolution changing means changes the traveling speed of a carriage to change the reading resolution of image data in the sub-scanning direction of the image reading device. The second resolution changer 102 serving as second resolution changing means interpolates the image data using an electric circuit, such as an ASIC, to change the resolutions of the image data in the main- and sub-scanning directions. The resolution setting unit 103 serving as resolution setting means sets the first resolution changer 101 and the second resolution changer 102 to magnifications (resolution change rates) of image data.

The first resolution changer 101 includes, for example, the light-source driver 17, the document-feed motor driver 20, and the carriage motor driver 28. The second resolution changer 102 performs processing in the magnification change unit 41b in the image processing unit 19 and operates as a module for changing the resolutions of image data in the main- and sub-scanning directions. The resolution setting unit 103 is a module implemented by the CPU 16.

In the present illustrative embodiment, when the image reading device 100 outputs an image with resolutions of 600 dpi (dot per inch) and 600 dpi in the main- and sub-scanning direction, a combination of magnifications between the first resolution changer 101 and the second resolution changer 102 is predetermined for each productivity mode, as described in the following example.

In the following description, the traveling speed at which a carriage reads an image at a resolution of 600 dpi in the sub-scanning direction is referred to as "standard-resolution speed". The operation of the CCD 17 at the standard-resolution speed for 600 dpi is used as a reference to control the driving of the CCD 17.

### Productivity mode 1 (productivity priority mode)

First resolution changer: 50% magnification and 300-dpi reading (at a speed twice the standard-resolution speed)
Second resolution changer: 200% magnification

### Productivity mode 2 (productivity/image-quality balance mode)

First resolution changer: 100% magnification and 400-dpi reading (at a speed 1.5 times the standard-resolution speed)
Second resolution changer: 150% magnification

### Productivity mode 3 (image-quality priority mode)

First resolution changer: 100% magnification and 600-dpi reading (at the standard-resolution speed)
Second resolution changer: 100% magnification

Next, a description is given of an operation performed when a user requests an image resolution of 600 dpi and the productivity mode 1 (productivity priority mode) is selected as the productivity mode.

In such a case, the resolution setting unit 103 instructs the first resolution changer 101 to move the carriage of the document reading section at a speed twice the standard-resolution speed. The resolution setting unit 103 also instructs the second resolution changer 102 to change the sub-scanning resolution of image data to 200%.

According to the instructions, the carriage travels to read a document, and the first resolution changer 101 outputs image data with main- and sub-scanning resolutions of 600 dpi and 300 dpi, respectively. The second resolution changer 102 changes the sub-scanning resolution of the image data output from the first resolution changer 101 to 200%, and outputs the image data with main- and sub-scanning resolutions of 600 dpi and 600.dpi to the subsequent step.

At this time, in theory the reading productivity becomes about twice the productivity of the productivity mode 3 (image-quality priority mode) described below, and thus the time required for reading the document in the productivity mode 1 is about half the reading time in the productivity mode 3. In fact, however, since it takes time to feed the document to the reading position, the reading time in the productivity mode 1 may not be precisely half the reading time in the productivity mode 3.

Next, a description is given of an operation performed when a user requests a resolution of 600 dpi and the productivity mode 2 (productivity/image-quality balance mode) is selected as the productivity mode.

In such a case, the resolution setting unit 103 instructs the first resolution changer 101 to move the carriage at a speed 1.5 times the standard-resolution speed. The resolution setting unit 103 also instructs the second resolution changer 102 to change the sub-scanning resolution of image data to 150%.

According to the instructions, the carriage travels to read a document, and the first resolution changer 101 outputs image data with main- and sub-scanning resolutions of 600 dpi and 400 dpi, respectively. The second resolution changer 102 changes the sub-scanning resolution of the image data output from the first resolution changer 101 to 150%, and outputs the image data with main- and sub-scanning resolutions of 600 dpi and 600 dpi to the subsequent step.

At this time, the reading productivity becomes about 1.5 times the productivity of the productivity mode 3 (image-quality priority mode), and thus the time required for reading the document in the productivity mode 2 is about two thirds of the reading time in the productivity mode 3. In fact, however, since it takes time to feed the document to the reading position, the reading time in the productivity mode 2 may not be precisely two-thirds of the reading time in the productivity mode 3.

Next, a description is given of an operation performed executed when a user requests an image resolution of 600 dpi and the productivity mode 3 (image-quality priority mode) is selected as the productivity mode.

In such a case, the resolution setting unit 103 instructs the first resolution changer 101 to move the carriage at the standard-resolution speed. The resolution setting unit 103 also instructs the second resolution changer 102 to change the sub-scanning resolution of image data to 100%, that is, so as not to change the sub-scanning resolution.

According to the instructions, the carriage travels to read a document, and the first resolution changer 101 outputs image data with main- and sub-scanning resolutions of 600 dpi and 600 dpi, respectively. The second resolution changer 102 changes the sub-scanning resolution of the image data output from the first resolution changer 101 to 100% and outputs the image data with main- and sub-scanning of 600 dpi and 600 dpi to the subsequent step.

At this time, the reading productivity becomes about half of the productivity of the productivity mode 1 (productivity priority mode), and thus the time required for reading the document in the productivity mode 3 is about twice the reading time in the productivity mode 1. In fact, however, since it takes time to feed the document to the reading position, the reading time in the productivity mode 3 may not be precisely twice the reading time in the productivity mode 1 but may be slightly greater than twice.

In the above-described examples, the image resolution requested from a user is assumed to be 600 dpi. Next, a description is given of an operation performed in each of the productivity modes 1 to 3 when the image resolution requested from a user is 300 dpi.

First, a description is given of an operation performed when a user requests an image resolution of 300 dpi and the productivity mode 1 (productivity priority mode) is selected as the productivity mode.

In such a case, the resolution setting unit 103 instructs the first resolution changer 101 to move the carriage at a speed four times the standard-resolution speed. The resolution setting unit 103 also instructs the second resolution changer 102 to change the main- and sub-scanning resolutions of image data to 50% and 200%, respectively.

According to the instructions, the carriage travels to read a document, and the first resolution changer 101 outputs image data with main- and sub-scanning resolutions of 600 dpi and 150 dpi, respectively. The second resolution changer 102 changes the main- and sub-scanning resolutions of the image data output from the first resolution changer 101 to 50% and 200%, respectively, and outputs the image data with main- and sub-scanning resolutions of 300 dpi and 300 dpi to the subsequent step.

At this time, the reading productivity becomes about twice the productivity of the productivity mode 3 (image-quality priority mode), and thus the time required for reading the document in the productivity mode 1 is about half the reading time in the productivity mode 3. In fact, however, since it takes time to feed the document to the reading position, the reading time in the productivity mode 1 may not be precisely twice the reading time in the productivity mode 3.

Next, a description is given of an operation performed when a user requests an image resolution of 300 dpi and the productivity mode 2 (productivity/image-quality balance mode) is selected as the productivity mode.

In such a case, the resolution setting unit 103 instructs the first resolution changer 101 to move the carriage at a speed three times the standard-resolution speed. The resolution setting unit 103 also instructs the second resolution changer 102 to change the main- and sub-scanning resolutions of image data to 50% and 150%, respectively.

According to the instructions, the carriage travels to read a document, and the first resolution changer 101 outputs image data with main- and sub-scanning resolutions of 600 dpi and 200 dpi, respectively. The second resolution changer 102 changes the main- and sub-scanning resolutions of the image data output from the first resolution changer 101 to 50% and 150%, respectively, and outputs the image data with main- and sub-scanning resolutions of 300 dpi and 300 dpi to the subsequent step.

At this time, the reading productivity becomes about 1.5 times the productivity of the productivity mode 3 (image-quality priority mode), and thus the time required for reading the document in the productivity mode 2 is about two thirds the reading time in the productivity mode 3. In fact, however, since it takes time to feed the document to the reading position, the reading time in the productivity mode 2 may not be precisely two thirds the reading time in the productivity mode 3.

Next, a description is given of an operation performed when a user requests an image resolution of 300 dpi and the productivity mode 3 (image-quality priority mode) is selected as the productivity mode.

In such a case, the resolution setting unit 103 instructs the first resolution changer 101 to move the carriage at a speed twice the standard-resolution speed. The resolution setting unit 103 also instructs the second resolution changer 102 to change the main- and sub-scanning resolutions of image data to 50% and 100%, respectively.

According to the instructions, the carriage travels to read a document, and the first resolution changer 101 outputs image data with main- and sub-scanning resolutions of 600 dpi and 300 dpi, respectively. The second resolution changer 102 changes the main- and sub-scanning resolutions of the image data output from the first resolution changer 101 to 50% and 100%, respectively, and outputs the image data with main- and sub-scanning resolutions of 300 dpi and 300 dpi to the subsequent step.

At this time, the reading productivity becomes about half the productivity of the productivity mode 1 (productivity priority mode), and thus the time required for reading the document in the productivity mode 3 is about two thirds the reading time in the productivity mode 1. In fact, however, since it takes time to feed the document to the reading position, the reading time in the productivity mode 3 may not be precisely twice the reading time in the productivity mode 1 but may be slightly greater than twice.

In the above-described examples, the image resolution requested from a user is assumed to be 600 dpi or 300 dpi. It is to be noted that, according to the present illustrative embodiment, a user can set a given image resolution and variably set a combination of magnifications (resolution change rates) between the first resolution changer 101 and the second resolution changer 102.

Next, a description is given of a user's operation to read a document. For example, a user performs the operation in the following manner.
(1) A user determines which should have priority, image quality (resolution in the sub-scanning direction) or reading speed, in reading a document and selects one productivity mode through an operation unit.
(2) The user places a plurality of document sheets on the document tray of the document feeder.
(3) The user presses a reading start button of an operation panel to start reading the document sheets.

As described above, for example, the sheet-through DF reading mode and the platen reading mode may be used as the reading mode of a document image. According to the present illustrative embodiment, combinations of the reading modes and the productivity modes may be predetermined, and information on the combinations is stored on the memory 27b or any other suitable storage. Such a configuration allows a document to be automatically read, for example, in the productivity mode 1 when a user selects the sheet-through DF reading mode or in the productivity mode 3 when a user selects the platen reading mode.

Next, the reading operation using such predetermined combinations of reading modes and productivity modes is described with reference to examples of the combination of the sheet-through DF reading mode and the productivity mode 1 (productivity priority mode) and the combination of the platen reading mode and the productivity mode 3 (image-quality priority mode).

A user performs the reading operation, for example, in the following manner.
(1) A user determines which should have priority, image quality or reading speed, in reading a document.
(2) If image quality is given priority, the user places the document on the document reading table.
(3) The user presses the reading start button of the operation panel to start reading the document.
(4) Alternatively, if reading speed is given priority, the user places the document on the document tray of the document feeder.
(5) The user presses the reading start button of the operation panel to start reading the document.

As described above, examples of the reading mode of a document image includes the ARDF reading mode. According to the present illustrative embodiment, the combinations of the reading modes including the ARDF reading mode and the productivity modes may be predetermined, and information on the combinations may be stored on the memory 27b or any other suitable storage. Such a configuration allows a document to be automatically read, for example, in the productivity mode 1 when a user selects the sheet-through DF reading mode, in the productivity mode 2 when a user selects the ARDF reading mode, or in the productivity mode 3 when the user selects the platen reading mode.

Next, the reading operation using predetermined combinations of reading modes and productivity modes is further described, taking examples of the combination of the sheet-through DF reading mode and the productivity mode 1 . (productivity priority mode), the combination of the ARDF reading mode and the productivity mode 2 (productivity/image-quality balance mode), and the combination of the platen reading mode and the productivity mode 3 (image-quality priority mode).

A user performs the reading operation, for example, in the following manner.
(1) A user determines which should have priority, image quality or reading speed, in reading a document.
(2) If image quality is given priority, the user places the document on the document reading table.
(3) The user presses the reading start button of the operation panel to start reading the document.
(4) Alternatively, if the reading speed is given priority, the user places the document on the document tray of the document feeder.
(5) If the user uses the automatic document feeder, the user selects either the sheet-through DF reading mode or the ARDF reading mode through the operation unit.
(6) The user presses the reading start button of the operation panel to start reading the document.

Although in the above description the combinations of reading modes and productivity modes are predetermined, according to the present illustrative embodiment, the combinations of magnifications between the first resolution changer 101 and the second resolution changer 102 may be associated with image-quality modes. Each of the image-quality modes includes a group of parameters of digital image processing, such as gamma conversion, filtering, or color conversion. In the following description, for example, the term "text mode" represents an image-quality mode in which digital-processing parameters are set so as to provide an image quality suitable for a document mainly including text. The term "photographic mode" represents an image-quality mode in which parameters suitable for a photographic document are set. The term "text/photographic mode" represents an image-quality mode in which intermediate parameters between the text and photographic modes are set.

A description is given below of examples in which a productivity mode is set corresponding to an image-quality mode selected by a user instead of a reading mode. In the following example, the document reading section is assumed to output an image with main- and sub-scanning resolutions of 600 dpi and 600 dpi. Examples of the combination of image-quality mode and productivity mode are as follows.

### Example 1: text mode and productivity mode 1

First resolution changer: 50% magnification and 300-dpi reading (at a speed twice the standard-resolution speed)
Second resolution changer: 200% magnification

### Example 2: text/photographic mode and productivity mode 2 (priority and image-quality balanced)

First resolution changer: (2/3X100)% magnification and 400-dpi reading (at a speed 1.5 times the standard-resolution speed)
Second resolution changer: 150% magnification

### Example 3: photographic mode and productivity mode 3 (image-quality priority mode)

First resolution changer: 100% magnification and 600-dpi reading (at the standard-resolution speed)
Second resolution changer: 100% magnification

A user performs a reading operation, for example, in the following manner.
(1) A user selects the text mode for a document mainly containing text as the image-quality mode.
(2) The productivity mode 1 is automatically selected corresponding to the text mode.
(3) The user selects the sheet-through DF reading mode to read a plurality of document sheets and places the plurality of document sheets on the automatic document feeder.
(4) The user presses the reading start button of the operation panel to start reading the document sheets.

Alternatively, according to the present illustrative embodiment, an image-quality mode and a productivity mode may be automatically set corresponding to a reading mode selected by a user. Examples of the combination of reading mode, image-quality mode, and productivity mode are as follows.

### Example 1: sheet-through DF reading mode, text mode, and productivity mode 1 (productivity priority mode)

First resolution changer: 50% magnification and 300-dpi reading (at a speed twice the standard-resolution speed)
Second resolution changer: 200% magnification

### Example 2: platen reading mode, photographic mode, and productivity mode 3 (image-quality priority mode)

First resolution changer: 100% magnification and 600-dpi reading (at the standard-resolution speed)
Second resolution changer: 100% magnification

Next, with respect to the above-described combination examples, a description is given of an operation performed when a user instructs the image reading device to read a document image using the sheet-through DF reading mode or the platen reading mode. For example, when a user selects the sheet-through DF reading mode and places a document on the automatic document feeder, the text mode and the productivity mode 1 are automatically selected to read the document. Alternatively, when a user selects the platen reading mode, the photographic mode, and the productivity mode 3 are automatically selected to read the document.

A user performs such an operation, for example, in the following manner.
(1) A user places a document on the document tray of the document feeder.
(2) The text mode and the productivity mode 1 are automatically set in response to the reading mode selected through the CPU.
(3) The user presses the reading start button of the operation panel to start reading the document.

According to the above-described illustrative embodiment, the image reading device includes the first and second resolution changers. The first resolution changer changes the linear velocity at which a document is fed or the traveling speed of the carriage for reading a document to change a resolution at which the document is read in the sub-scanning direction. The second resolution changer electrically interpolates the image data output from the first resolution changer to change the resolution of the image data. The image reading device can change the combination of magnifications (resolution change rates) in the first and second resolution changers, and further includes the resolution setting unit to set the combination as a predetermined mode. Such a configuration allows a user to select either an image-quality priority mode or a productivity priority mode, thus improving convenience for users.

Further, although in the platen reading mode it may take a user longer to replace document sheets or pages, a user may not require increased reading productivity. Further, when the document is not a bound book or magazine but a cut sheet, a user who wants increased reading productivity can select the sheet-through DF reading mode. Thus, according to the above-described illustrative embodiment, a user may use the platen reading mode to read a magazine or book and the sheet-through DF reading mode to read a cut-sheet document often used in an office environment.

According to an illustrative embodiment, a given combination of a reading mode and a reading productivity may be fixed depending on a user's situation. Such a configuration allows a user to set such a desired reading productivity in a fixed manner without re-setting a productivity mode for each operation, thereby improving convenience for users.

Among a plurality of reading modes used in the image reading device, the highest productivity value may differ depending on the performances of actuators used. For example, an actuator for feeding a document in the automatic document feeder may differ from an actuator for moving a carriage in the platen reading mode because of constraints on mechanical layout or cost of the image reading device. Alternatively, even if the actuators are the same type, a difference between the mechanism for feeding the document and the mechanism for moving the carriage may result in a difference in the upper limitation of the reading speed. Thus, in the platen reading mode as well, a user may want to increase reading productivity per document sheet.

Hence, to meet such a demand for a higher reading productivity per document sheet, the image reading device according to the present illustrative embodiment may associate settings of a productivity mode capable of achieving the highest reading productivity with a productivity mode capable of reading at the highest speed.

Such a configuration can effectively improve the reading productivity. Further, a user can easily use a reading productivity in the most effective combination by only selecting a'desired reading mode, thus improving convenience for users. For an actuator compatible with one reading mode, when the actuator is assumed to be used at a fixed reading speed, it is easier to select components than when the actuator is assumed to be used at a variable reading speed, thereby increasing development efficiency. Accordingly, when an actuator is assumed to be used at a fixed reading speed in one reading mode, the above-described advantages can be more easily obtained.

As described above, in a typical office environment, a plurality of cut-sheet documents are often used and, among various reading modes, the sheet-through DF reading mode can provide the highest reading productivity at a relatively low cost.

Accordingly, according to an illustrative embodiment, a productivity mode (a combination of magnifications between the first resolution changer and the second resolution changer) capable of achieving the highest reading productivity may be associated with the sheet-through DF reading mode capable of relatively easily providing a high reading productivity in view of cost and mechanism. Such a combination of the sheet-through DF reading mode and a productivity mode having a high productivity can more effectively achieve a high productivity at a relatively low cost.

Generally, there is a demand for reading a photographic document at a high image quality. Among a plurality of reading modes, the platen reading mode may provide a relatively high image quality than the sheet-through DF reading mode. One reason is that, in the sheet-through DF reading mode, since a document is read during travel, document skew or color misalignment may appear, resulting in image degradation. For such a reason, the platen reading mode may be used to meet a demand for a higher image quality.

Hence, according to an illustrative embodiment, a productivity mode capable of providing a high image quality at the lowest productivity may be associated with the platen reading mode. Thus, among a plurality of selectable reading modes, a productivity mode capable of achieving the highest image quality is combined with a reading mode (the platen reading mode) capable of achieving the highest image quality, allowing a user to easily obtain a high image quality without considering a productivity mode.

Although in the above-described example the platen reading mode is associated with the productivity mode in which image quality is given priority, a user may request to associate a document type (image-quality mode), rather than such a reading mode, with a productivity mode.

For example, when a user tries to read an image from a bound document mainly containing text, the user uses the platen reading mode because the bound document is not a cut-sheet type. Further, because the document mainly contains text, a user may not put a priority on image quality. In such a case, when the user tries to read as many document sheets or pages as possible, the unique correspondence between the reading modes and the productivity modes as described in the above-described example may not meet a user's request. This is the case with the sheet-through DF reading mode and, when a photographic document is read in the sheet-through DF reading mode, an image-quality priority mode at a low productivity is not selected in the above-described example.

Hence, according to an illustrative embodiment, image-quality modes may be associated with productivity modes. Such a configuration allows a user to easily select an optimal productivity and image quality level without being puzzled by the selection of the productivity mode, thus improving convenience for users.

As described above, in a typical office environment, a plurality of cut-sheet documents is relatively often used and, among a plurality of reading modes, the sheet-through DF reading mode can achieve the highest reading productivity at a relatively low cost.

Hence, according to an illustrative embodiment, a productivity mode (a combination of resolution change rates between the first resolution changer and the second resolution changer) capable of achieving the highest productivity may be fixedly associated with the sheet-through DF reading mode capable of relatively easily achieving a high productivity in view of cost and mechanism. Such a configuration can achieve the highest productivity among a plurality of selectable reading modes at a relatively low cost. Further, the productivity modes may be associated with the image-quality modes. Such a configuration allows a user to select an image-quality mode and a productivity mode by selecting only one reading mode. As a result, a user need not instruct an image-quality mode and a productivity mode through the operation unit, thus further improving convenience for users.

Numerous additional modifications and variations are possible in light of the above teachings. It is therefore to be understood that within the scope of the appended claims, the disclosure of the present invention may be practiced otherwise than as specifically described herein.

With some embodiments of the present invention having thus been described, it will be obvious that the same may be varied in many ways. Such variations are not to be regarded as a departure from the spirit and scope of the present invention, and all such modifications are intended to be included within the scope of the present invention.

For example, elements and/or features of different illustrative embodiments may be combined with each other and/or substituted for each other within the scope of this disclosure and appended claims.

Further, as described above, any one of the above-described and other methods of the present invention may be embodied in the form of a computer program stored in any kind of storage medium.

Examples of such a storage medium include, but are not limited to, flexible disk, hard disk, optical discs, magnetooptical discs, magnetic tapes, nonvolatile memory cards, ROM (read-only-memory), etc.

Alternatively, any one of the above-described and other methods of the present invention may be implemented by ASIC, prepared by interconnecting an appropriate network of conventional component circuits or by a combination thereof with one or more conventional general purpose microprocessors and/or signal processors programmed accordingly.

## Claims

1. An image reading device 100 for reading a document 13 using a plurality of reading modes including a sheet-through reading mode for reading a document 13 at a fixed reading position while the document 13 is automatically fed, the device 100 comprising:
a first resolution changing means 101 to change one of a linear velocity at which the document 13 is fed and a traveling speed of a reading carriage 4 to change a resolution at which the document 13 is read in a sub-scanning direction;
**characterized by**:
a second resolution changing means 102 to electrically interpolate image data output from the first resolution changing means 101 to change a resolution of the image data; and
a resolution setting means 103 to provide a plurality of combinations of resolution change rates for the first resolution changing means 101 and the second resolution changing means 102 as a plurality of resolution change modes, each having a respective resolution change rate for each of the first and second resolution changing means 101, 102, and set the first resolution changing means 101 and the second resolution changing means 102 to one of said combinations of resolution change rates.

2. The image reading device 100 according to claim 1, wherein the plurality of reading modes is associated with the plurality of combinations of resolution change rates.

3. The image reading device 100 according to claim 2, wherein, among the plurality of combinations of resolution change rates, a combination of resolution change rates for obtaining a minimum resolution of the image data output from the first resolution changing means 101 is associated with a reading mode for reading the document 13 at a highest linear velocity among the plurality of reading modes.

4. The image reading device 100 according to claim 2, wherein, among the plurality of combinations of resolution change rates, a combination of resolution change rates for obtaining a minimum resolution of the image data output from the first resolution changing means 101 is associated with the sheet-through reading mode.

5. The image reading device 100 according to claim 2, 3 or 4 wherein the plurality of reading modes includes a platen reading mode for reading a document 13 placed on a table 3 using the reading carriage 4, and
wherein, among the plurality of combinations of resolution change rates, a combination of resolution change rates for obtaining a maximum resolution of the image data output from the first resolution changing means 101 is associated with the platen reading mode.

6. The image reading device 100 according to any one of claims 1 to 5,
wherein the image reading device 100 reads the document 13 in a plurality of image-quality modes, and
wherein, among the plurality of combinations of resolution change rates between the first resolution changing means 101 and the second resolution changing means 102 , an optimal combination of resolution change rates is associated with each of the image quality modes.

7. The image reading device 100 according to claim 6, wherein, among the plurality of image quality modes, an image quality mode for obtaining a maximum number of documents 13 read per unit time is associated with the sheet through reading mode.

8. An image forming apparatus 200 comprising the image reading device 100 according to any one of claims 1 to 7.

9. A method of reading a document 13 using a plurality of reading modes including a sheet-through reading mode for reading the document 13 at a fixed reading position while automatically feeding the document 13, the method comprising:
changing one of a linear velocity at which the document 13 is fed and a traveling speed of a reading carriage 4 using a first resolution changing means 101 to change a resolution at which the document 13 is read in a sub-scanning direction;
electrically interpolating image data output from the first resolution changing means 101 using a second resolution changing means 102 to change a resolution of the image data;
providing a plurality of combinations of resolution change rates for the first resolution changing means 101 and the second resolution changing means 102 as a plurality of resolution change modes, each having a respective resolution change rate for each of the first and second resolution changing means 101, 102;
setting the first resolution changing means 101 and the second resolution changing means 102 to one of said combinations of resolution change rates; and
optionally, further comprising forming an image based on the image data having the changed resolution.

10. The method according to claim 9, further comprising associating the plurality of reading modes with the plurality of combinations of resolution change rates.

11. The method according to claim 10, wherein the associating includes associating, among the plurality of combinations of resolution change rates, a combination of resolution change rates for obtaining a minimum resolution of the image data output from the first resolution changing means 101 with a reading mode for reading the document 13 at a highest linear velocity among the plurality of reading modes.

12. The method according to claim 10, wherein the associating includes associating, among the plurality of combinations of resolution change rates, a combination of resolution change rates for obtaining a minimum resolution of the image data output from the first resolution changing means 101 with the sheet-through reading mode.

13. The method according to any one of claims 10 to 12, wherein the plurality of reading modes includes a platen reading mode for reading a document 13 placed on a table 3 using the reading carriage 4, and
wherein the associating includes associating, among the plurality of combinations of resolution change rates, a combination of resolution change rates for obtaining a maximum resolution of the image data output from the first resolution changing means 101 with the platen reading mode.

14. The method according to any one of claims 9 to 13, further comprising:
reading the document 13 in a plurality of image-quality modes; and
associating with each of the image quality modes an optimal combination of resolution change rates among the plurality of combinations of resolution change rates between the first resolution changing means 101 and the second resolution changing means 102.

15. The method according to claim 14, wherein the associating includes associating with the sheet through reading mode an image quality mode for obtaining a maximum number of documents 13 read per unit time among the plurality of image quality modes.

## Patentansprüche

1. Bildlesevorrichtung 100 zum Lesen eines Dokuments 13 unter Verwendung von mehreren Lesemodi, die einen Blattdurchzug-Lesemodus zum Lesen eines Dokuments 13 an einer festen Leseposition, während das Dokument 13 automatisch eingeführt wird, umfassen, wobei die Vorrichtung 100 umfasst:
erste Mittel zum Ändern einer Auflösung 101, um eine lineare Geschwindigkeit, mit der das Dokument 13 eingeführt wird, oder eine Vorschubgeschwindigkeit des Leseschlittens 4 zu ändern, um eine Auflösung, mit der das Dokument 13 in einer Unterabtastrichtung gelesen wird, zu ändern;
**gekennzeichnet durch**
zweite Mittel zum Ändern einer Auflösung 102, um von den ersten Mitteln zum Ändern einer Auflösung 101 ausgegebene Bilddaten elektrisch zu interpolieren, um eine Auflösung der Bilddaten zu ändern; und
Mittel zum Einstellen einer Auflösung 103, um mehrere Kombinationen von Auflösungsänderungsraten für die ersten Mittel zum Ändern einer Auflösung 101 und die zweiten Mittel zum Ändern einer Auflösung 102 als mehrere Auflösungsänderungsmodi bereitzustellen, wobei jede eine jeweilige Änderungsrate sowohl für die ersten als auch die zweiten Mittel zum Ändern einer Auflösung besitzt, und die ersten Mittel zum Ändern einer Auflösung und die zweiten Mittel zum Ändern einer Auflösung 102 auf eine der Kombinationen der Auflösungsänderungsraten einzustellen.

2. Bildlesevorrichtung 100 nach Anspruch 1, wobei die mehreren Lesemodi den mehreren Kombinationen der Auflösungsänderungsraten zugeordnet sind.

3. Bildlesevorrichtung 100 nach Anspruch 2, wobei unter den mehreren Kombinationen der Auflösungsänderungsraten eine Kombination der Auflösungsänderungsraten zum Erhalten einer minimalen Auflösung der von den ersten Mitteln zum Ändern einer Auflösung 101 ausgegebenen Bilddaten einem Lesemodus zum Lesen des Dokuments 13 mit einer höchsten linearen Geschwindigkeit unter den mehreren Lesemodi zugeordnet ist.

4. Bildlesevorrichtung 100 nach Anspruch 2, wobei unter den mehreren Kombinationen der Auflösungsänderungsraten eine Kombination der Auflösungsänderungsraten zum Erhalten einer minimalen Auflösung der von den ersten Mitteln zum Ändern einer Auflösung 101 ausgegebenen Bilddaten mit dem Blattdurchzug-Lesemodus verbunden ist.

5. Bildlesevorrichtung 100 nach Anspruch 2, 3 oder 4, wobei die mehreren Lesemodi einen Trägerplatten-Lesemodus zum Lesen eines Dokuments 13, das auf einem Tisch 3 positioniert ist, unter Verwendung des Leseschlittens 4 umfassen und
wobei unter den mehreren Kombinationen der Auflösungsänderungsraten eine Kombination der Auflösungsänderungsraten zum Erhalten einer maximalen Auflösung der von den ersten Mitteln zum Ändern einer Auflösung 101 ausgegebenen Bilddaten dem Trägerplatten-Lesemodus zugeordnet ist.

6. Bildlesevorrichtung 100 nach einem der Ansprüche 1 bis 5,
wobei die Bildlesevorrichtung 100 das Dokument 13 in mehreren Bildqualitätsmodi liest und
wobei unter den mehreren Kombinationen der Auflösungsänderungsraten zwischen den ersten Mitteln zum Ändern einer Auflösung 101 und den zweiten Mitteln zum Ändern einer Auflösung 102 jedem der Bildqualitätsmodi eine optimale Kombination der Auflösungsänderungsraten zugeordnet ist.

7. Bildlesevorrichtung 100 nach Anspruch 6, wobei unter den mehreren Bildqualitätsmodi dem Blattdurchzug-Lesemodus ein Bildqualitätsmodus zum Erhalten einer maximalen Anzahl von gelesenen Dokumenten 13 pro Zeiteinheit zugeordnet ist.

8. Bilderzeugungsvorrichtung 200, die die Bildlesevorrichtung 100 nach einem der Ansprüche 1 bis 7 umfasst.

9. Verfahren zum Lesen eines Dokuments 13 unter Verwendung von mehreren Lesemodi, die einen Blattdurchzug-Lesemodus zum Lesen des Dokuments 13 an einer festen Leseposition, während das Dokument 13 automatisch eingeführt wird, umfassen, wobei das Verfahren umfasst:
Ändern einer linearen Geschwindigkeit, mit der das Dokument 13 eingeführt wird, oder einer Vorschubgeschwindigkeit des Leseschlittens 4 unter Verwendung von ersten Mitteln zum Ändern einer Auflösung 101, um eine Auflösung, mit der das Dokument 13 in einer Unterabtastrichtung gelesen wird, zu ändern;
elektrisches Interpolieren der von den ersten Mitteln zum Ändern einer Auflösung 101 ausgegebenen Bilddaten unter Verwendung von zweiten Mitteln zum Ändern einer Auflösung 102, um eine Auflösung der Bilddaten zu ändern;
Bereitstellen mehrerer Kombinationen von Auflösungsänderungsraten für die ersten Mittel zum Ändern einer Auflösung 101 und die zweiten Mittel zum Ändern einer Auflösung 102 als mehrere Auflösungsänderungsmodi, wobei jede eine jeweilige Auflösungsänderungsrate sowohl für die ersten als auch die zweiten Mittel zum Ändern einer Auflösung 101, 102 besitzt;
Einstellen der ersten Mittel zum Ändern einer Auflösung 101 und der zweiten Mittel zum Ändern einer Auflösung 102 auf eine der Kombinationen der Auflösungsänderungsraten; und
das wahlweise ferner umfasst, ein Bild aufgrund der Bilddaten mit der geänderten Auflösung zu bilden.

10. Verfahren nach Anspruch 9, das ferner umfasst, die mehreren Lesemodi den mehren Kombinationen der Auflösungsänderungsraten zuzuordnen.

11. Verfahren nach Anspruch 10, wobei das Zuordnen umfasst, unter den mehreren Kombinationen der Auflösungsänderungsraten eine Kombination der Auflösungsänderungsraten zum Erhalten einer minimalen Auflösung der von den ersten Mitteln zum Ändern einer Auflösung 101 ausgegebenen Bilddaten einem Lesemodus zum Lesen des Dokuments 13 mit einer höchsten linearen Geschwindigkeit unter den mehreren Lesemodi zuzuordnen.

12. Verfahren nach Anspruch 10, wobei das Zuordnen umfasst, unter den mehreren Kombinationen der Auflösungsänderungsraten eine Kombination der Auflösungsänderungsraten zum Erhalten einer minimalen Auflösung der von den ersten Mitteln zum Ändern einer Auflösung 101 ausgegebenen Bilddaten dem Blattdurchzug-Lesemodus zuzuordnen.

13. Verfahren nach einem der Ansprüche 10 bis 12, wobei die mehreren Lesemodi einen Trägerplatten-Lesemodus zum Lesen eines Dokuments 13, das auf einem Tisch 3 positioniert ist, unter Verwendung des Leseschlittens 4 enthalten und
wobei das Zuordnen umfasst, unter den mehreren Kombinationen der Auflösungsänderungsraten eine Kombination der Auflösungsänderungsraten zum Erhalten einer maximalen Auflösung der von den ersten Mitteln zum Ändern einer Auflösung 101 ausgegebenen Bilddaten dem Trägerplatten-Lesemodus zuzuordnen.

14. Verfahren nach einem der Ansprüche 9 bis 13, das ferner umfasst:
Lesen des Dokuments 13 in mehreren Bildqualitätsmodi; und
Zuordnen einer optimalen Kombination der Auflösungsänderungsraten unter den mehreren Kombinationen der Auflösungsänderungsraten zwischen den ersten Mitteln zum Ändern einer Auflösung 101 und den zweiten Mitteln zum Ändern einer Auflösung 102 zu jedem der Bildqualitätsmodi.

15. Verfahren nach Anspruch 14, wobei das Zuordnen umfasst, einen Bildqualitätsmodus zum Erhalten einer maximalen Anzahl an gelesenen Dokumenten 13 pro Zeiteinheit dem Blattdurchzug-Lesemodus zuzuordnen.

## Revendications

1. Dispositif de lecture d'image 100 pour lire un document 13 utilisant une pluralité de modes de lecture comprenant un mode de lecture feuille par feuille pour lire un document 13 en une position de lecture fixe tandis que le document 13 est automatiquement délivré, le dispositif 100 comportant :
un premier moyen de changement de résolution 101 pour changer l'une d'une vitesse linéaire à laquelle le document 13 est délivré et d'un taux de déplacement d'un chariot de lecture 4 pour changer une résolution à laquelle le document 13 est lu dans une direction de sous-balayage ;
**caractérisé par** :
un second moyen de changement de résolution 102 pour interpoler électriquement des données d'image délivrées depuis le premier moyen de changement de résolution 101 pour changer une résolution des données d'image ; et
un moyen de détermination de résolution 103 pour délivrer une pluralité de combinaisons de taux de changement de résolution pour le premier moyen de changement de résolution 101 et le second moyen de changement de résolution 102 en tant que pluralité de modes de changement de résolution, chacun possédant un taux de changement de résolution respectif pour chacun des premier et second moyens de changement de résolution 101, 102, et fixer le premier moyen de changement de résolution 101 et le second moyen de changement de résolution 102 à l'une desdites combinaisons de taux de changement de résolution.

2. Dispositif de lecture d'image 100 selon la revendication 1, dans lequel la pluralité de modes de lecture est associée à la pluralité de combinaisons de taux de changement de résolution.

3. Dispositif de lecture d'image 100 selon la revendication 2, dans lequel, parmi la pluralité de combinaisons de taux de changement de résolution, une combinaison des taux de changement de résolution pour obtenir une résolution minimum des données d'image délivrées depuis le premier moyen de changement de résolution 101 est associée à un mode de lecture pour lire le document 13 à une vitesse linéaire très élevée parmi la pluralité de modes de lecture.

4. Dispositif de lecture d'image 100 selon la revendication 2, dans lequel, parmi la pluralité de combinaisons de taux de changement de résolution, une combinaison de taux de changement de résolution pour obtenir une résolution minimum des données d'image délivrées à partir du premier moyen de changement de résolution 101 est associée au mode de lecture feuille par feuille.

5. Dispositif de lecture d'image 100 selon la revendication 2, 3 ou 4 dans lequel la pluralité de modes de lecture comprend un mode de lecture sur vitre d'exposition pour lire un document 13 placé sur une vitre 3 en utilisant le chariot de lecture 4, et
dans lequel, parmi la pluralité de combinaisons de taux de changement de résolution, une combinaison de taux de changement de résolution pour obtenir une résolution maximum des données d'image délivrées depuis le premier moyen de changement de résolution 101 est associée au mode de lecture sur vitre d'exposition.

6. Dispositif de lecture d'image 100 selon l'une quelconque des revendications 1 à 5,
dans lequel le dispositif de lecture d'image 100 lit le document 13 selon la pluralité de modes de qualité d'image, et
dans lequel, parmi la pluralité de combinaisons de taux de changement de résolution entre le premier moyen de changement de résolution 101 et le second moyen de changement de résolution 102, une combinaison optimale des taux de changement de résolution est associée à chacun des modes de qualité d'image.

7. Dispositif de lecture d'image 100 selon la revendication 6, dans lequel, parmi la pluralité de modes de qualité d'image, un mode de qualité d'image pour obtenir un nombre maximum de documents 13 lus par unité de temps est associée au mode de lecture feuille par feuille.

8. Appareil de formation d'image 200 comprenant le dispositif de lecture d'image 100 selon l'une quelconque des revendications 1 à 7.

9. Procédé de lecture d'un document 13 utilisant une pluralité de modes de lecture comprenant un mode de lecture feuille par feuille pour lire le document 13 en une position de lecture fixe tout en délivrant automatiquement le document 13, le procédé comportant :
le changement de l'une d'une vitesse linéaire à laquelle le document 13 est délivré et d'un taux de déplacement d'un chariot de lecture 4 utilisant un premier moyen de changement de résolution 101 pour changer une résolution à laquelle le document 13 est lu dans une direction de sous-balayage ;
l'interpolation électrique des données d'image délivrées depuis le premier moyen de changement de résolution 101 utilisant un second moyen de changement de résolution 102 pour changer une résolution des données d'image ;
la fourniture d'une pluralité de combinaisons de taux de changement de résolution pour le premier moyen de changement de résolution 101 et le second moyen de changement de résolution 102 en tant que pluralité de modes de changement de résolution, chacun possédant un taux de changement de résolution respectif pour chacun des premier et second moyens de changement de résolution 101, 102 ;
la fixation du premier moyen de changement de résolution 101 et du second moyen de changement de résolution 102 à l'une desdites combinaisons de taux de changement de résolution ; et
facultativement, comprenant en outre la formation d'une image en fonction des données d'image possédant la résolution modifiée.

10. Procédé selon la revendication 9, comportant en outre l'association de la pluralité de modes de lecture avec la pluralité de combinaisons de taux de changement de résolution.

11. Procédé selon la revendication 10, dans lequel l'association comprend l'association, parmi la pluralité de combinaisons de taux de changement de résolution, d'une combinaison de taux de changement de résolution pour obtenir une résolution minimum des données d'image délivrées depuis le premier moyen de changement de résolution 101 avec un mode de lecture pour lire le document 13 à une vitesse linéaire très élevée parmi la pluralité de modes de lecture.

12. Procédé selon la revendication 10, dans lequel l'association comprend l'association, parmi la pluralité de combinaisons de taux de changement de résolution, d'une combinaison de taux de changement de résolution pour obtenir une résolution minimum des données d'image délivrées depuis le premier moyen de changement de résolution 101 au mode de lecture feuille par feuille.

13. Procédé selon l'une quelconque des revendications 10 à 12, dans lequel la pluralité de modes de lecture comprend un mode de lecture sur vitre d'exposition pour lire un document 13 placé sur une vitre 3 en utilisant le chariot de lecture 4, et
dans lequel l'association comprend l'association, parmi la pluralité de combinaisons de taux de changement de résolution, d'une combinaison de taux de changement de résolution pour obtenir une résolution maximum des données d'image délivrées depuis le premier moyen de changement de résolution 101 au mode de lecture sur vitre d'exposition.

14. Procédé selon l'une quelconque des revendications 9 à 13, comportant en outre :
la lecture du document 13 selon une pluralité de modes de qualité d'image ; et
l'association à chacun des modes de qualité d'image d'une combinaison optimale de taux de changement de résolution parmi la pluralité de combinaisons de taux de changement de résolution entre le premier moyen de changement de résolution 101 et le second moyen de changement de résolution 102.

15. Procédé selon la revendication 14, dans lequel l'association comprend l'association au mode de lecture feuille par feuille d'un mode de qualité d'image pour obtenir un nombre maximum de documents 13 lus par unité de temps parmi la pluralité de modes de qualité d'image.
